# EUROPEAN PATENT APPLICATION

(11) **EP 1 643 778 A2**
(43) Date of publication of application: **05.04.2006**
(21) Application number: 05021296.8
(22) Date of filing: 29.09.2005
(51) Int. Cl.: H04Q 7/22, H04Q 7/38, H04Q 7/32

(54) **Push-to-talk communication system, mobile communication terminal, and voice transmitting method**

(30) Priority: 29.09.2004 JP 2004282893
(71) Applicant: NEC CORPORATION, Tokyo (JP)
(72) Inventor: Nakamura, Keigo, Tokyo (JP)
(74) Representative: Vossius & Partner

(57) **Abstract**

Provided is a push-to-talk (PTT) communication system including: a server for controlling PTT communications; and a mobile communication terminal that requests the server for a voice transmission right for transmitting voice information to a predetermined communication counterpart based on the PTT communications. The mobile communication terminal requests the server for the voice transmission right when detecting that a voice is being inputted thereto. The mobile communication terminal includes: a voice input section; and a control section for transmitting a request for a voice transmission right to a PTT server when detecting that a voice is being inputted to the mobile communication terminal. According to the PTT communication system, it is possible to readily transmit a voice based on the PTT communications and respond to a voice without pressing a PTT button.

## Description

The present invention relates to a push-to-talk (PTT) communication system, a mobile communication terminal, and a voice transmitting method using the mobile communication terminal, and more particularly to a technique of initiating a talk based on PTT communications using a mobile communication terminal.

In recent years, there has been a widespread use of cellular phones having a push-to-talk (PTT) communication function. Such cellular phones are devices that are a kind of a walkie talkie using an internet protocol (IP) inmobile communications. In PTT communications, a user of a cellular phone specifies one or plural callees, and presses a PTT button to obtain a talk right, which allows one-way transmission of a voice etc. to the callees. The user does not need to dial the phone number of a callee. In the PTT communications, the time required for establishing a connection to a callee is short. JP 2003-526275 A discloses an example of a communication terminal having such a PTT function.

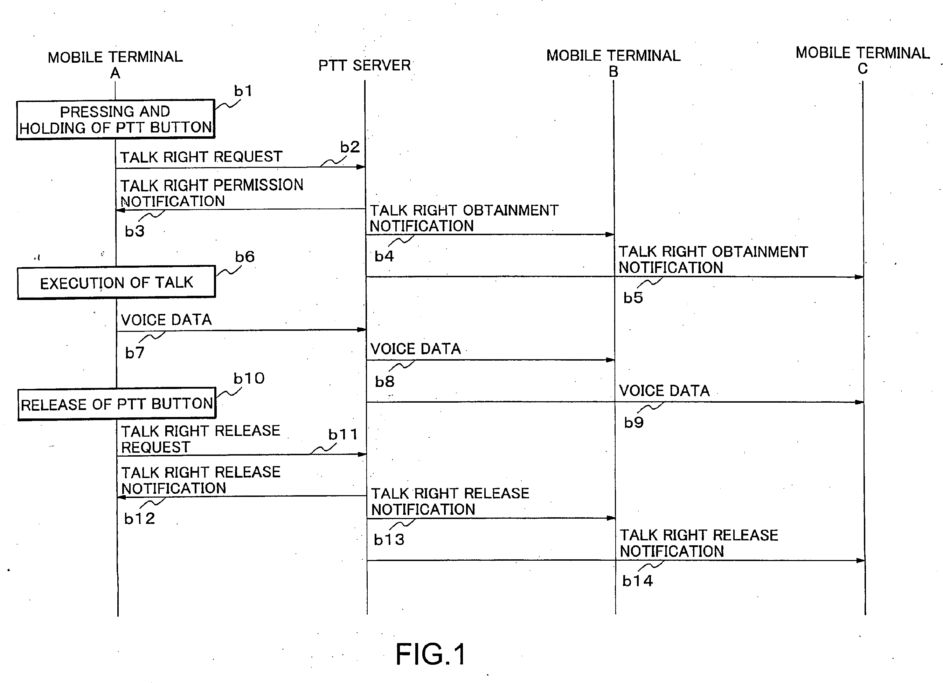

FIG. 1 shows an example of PTT communications. In the example shown in FIG. 1, a mobile terminal A performs PTT communications with mobile terminals B and C via a PTT server. Upon starting the PTT communications, a user of the mobile terminal A presses a PTT button provided to the mobile terminal A (b1), and requests the PTT server for a talk right (b2). The PTT server receives the request, and checks whether or not any other mobile terminal has obtained a talk right. If no other mobile terminal has obtained a talk right, the PTT server transmits a talk right permission notification to the mobile terminal A (b3), and transmits a talk right obtainment notification to the mobile terminals B and C (b4 and b5) . Upon reception of the talk right permission notification from the PTT server, the mobile terminal A becomes ready to transmit a voice. Upon reception of the talk right obtainment notification, the mobile terminals B and C recognize that either the mobile terminal A or any other mobile terminal has obtained a talk right. When the user of the mobile terminal A starts to talk (b6), the mobile terminal A starts to transmit a voice to a PTT server (b7). In addition, the PTT server transmits the voice to the mobile terminals B and C (b8 and b9). The users of the mobile terminals B and C can listen to the voice transmitted from the mobile terminal A.

To end the voice transmission, the user of the mobile terminal A stops holding the PTT button, that is, moves his/her finger off the PTT button (b10). Then, the mobile terminal A automatically transmits a request for a termination of a talk right to the PTT server (b11) . Upon reception of the request, the PTT server transmits a talk right termination notification to the mobile terminals A to C (b12, b13, b14). After that, any one of the users of the mobile terminals A to C can press the PTT button to request a talk right based on the PTT communications .

As described in the above example, to start the PTT communications, the user of a mobile terminal needs to press the PTT button to obtain a talk right. Moreover, the user must hold the PTT button down to maintain the voice transmission. Those operations are required even when a mobile terminal responds to a voice message transmitted based on the PTT communications. The general phone communications allows a simultaneous two-way talk, and allows a callee to respond to a caller anytime, without any particular operation. However, with PTT communications, the callee must press the PTT button to obtain a talk right, even for transmitting a response. When willing to transmit a response, the callee is not always able to press the PTT button. For example, the callee may be using a headset device or a hands-free device. Also, the PTT button is relatively large, which imposes limitations on the downsizing of a mobile terminal. Therefore, there is demand for a mobile terminal that allows use of the PTT communications without the use of PTT button.

The present invention has an object to provide a PTT communication system, avoicetransmittingmethod, and a terminal that allow easy transmission of voice and allow easy response to the transmission based on push-to-talk (PTT) communications.

In order to achieve the above-mentioned object, according to an aspect of the present invention, there is provided a PTT communication system, including: a server for controlling PTT communications; and a mobile communication terminal for transmitting voice to a predetermined communication counterpart based on the PTT communications . The mobile communication terminal requests the server for a voice transmission right when detecting that a voice is being inputted thereto.

According to another aspect of the present invention, there is provided a mobile communication terminal, including: a voice input section; and a control section for transmitting a request for a voice transmission right to a server for controlling the PTT communications when detecting that a voice is being inputted to the mobile communication terminal.

According to another aspect of the present invention, there is provided a voice transmitting method, including: detecting whether or not a voice is being inputted; and requesting a PTT communication server for a voice transmission right when detecting that a voice is being inputted.

According to another aspect of the present invention, there is provided a computer program product in a computer readable medium in a mobile communication terminal, the computer program product including the steps of: detecting whether or not a voice is being inputted; and requesting a PTT communication server for a voice transmission right when detecting that a voice is being inputted.

According to the present invention, a user of the mobile communication terminal having a PTT communication function is capable of easily issuing the request for a voice transmission right, readily continuing voice transmission, and readily responding to a received call.

The above and other objects, features and advantages of the present invention will become apparent from the following detailed description when taken with the accompanying drawings in which:
FIG. 1 shows an example of a sequence of push-to-talk (PTT) communications;
FIG. 2 is a block diagram of a PTT communication system according to an embodiment of the present invention;
FIG. 3 is a flowchart of an operational example of a mobile communication terminal according to the present invention;
FIG. 4 is a sequence chart showing an operational example of a PTT communication system according to the present invention;
FIG. 5 is a block diagram of a PTT communication system according to another embodiment of the present invention; and
FIG. 6 is a flowchart of an operational example of a mobile communication terminal having a voice recognition section.

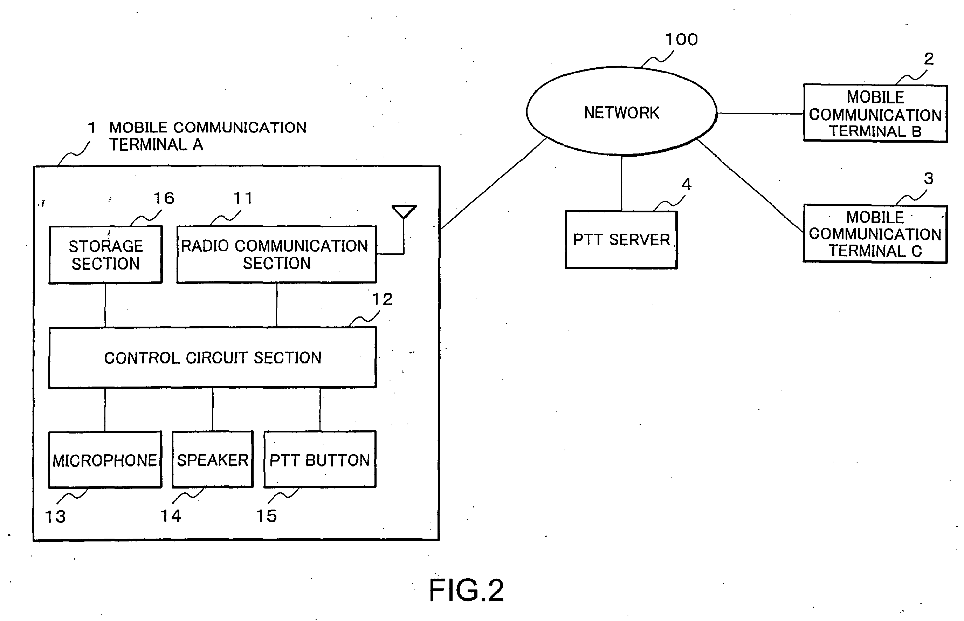

Described below is a preferred embodiment of the present invention. FIG. 2 is a block diagram illustrating an exemplary embodiment of a push-to-talk (PTT) communication system. In the PTT communication system, mobile communication terminals (hereinafter, referred to simply as "terminals") A to C and a PTT server 4 are connected via a network 100. The terminal A includes a radio communication section 11, a control circuit section 12, a microphone 13, a speaker 14, a PTT button 15, and a storage section 16. The storage section 16 stores a program executed by the control circuit section 12, and can store various voice data. According to an input made by a user, the control circuit section 12 designates a terminal to which a voice is transmitted based on the PTT communications, that is, a communication counterpart to participate a PTT communication session. In the following example, a user of the terminal A designates the terminals B and C. Then, upon detecting that a voice has been input through the microphone 13, the control circuit section 12 issues a request for a voice transmission right to the PTT server 4. Upon reception of a voice transmission permission notification from the PTT server 4, the control circuit section 12 is ready to transmit the voice inputted through the microphone 13 to the PTT server 4. When no additional voice is inputted through the microphone 13 for a predetermined period of time, the control circuit section 12 requests the PTT server 4 to terminate the voice transmission right. The PTT server 4 then transmits a notification that the voice transmission right has been terminated to the terminals A to C. The PTT server 4 may transmits a notification that the voice transmission right will be terminated in the very short time to the terminals. After that, any one of the users of the mobile terminals A to C can input a voice through the microphone 13 to request a voice transmission right. Various networks can be used as the network 100, which include a general cellular phone network and a wireless LAN. Various servers can be used as the PTT server 4, which include a session initiation protocol (SIP) server and a presence server.

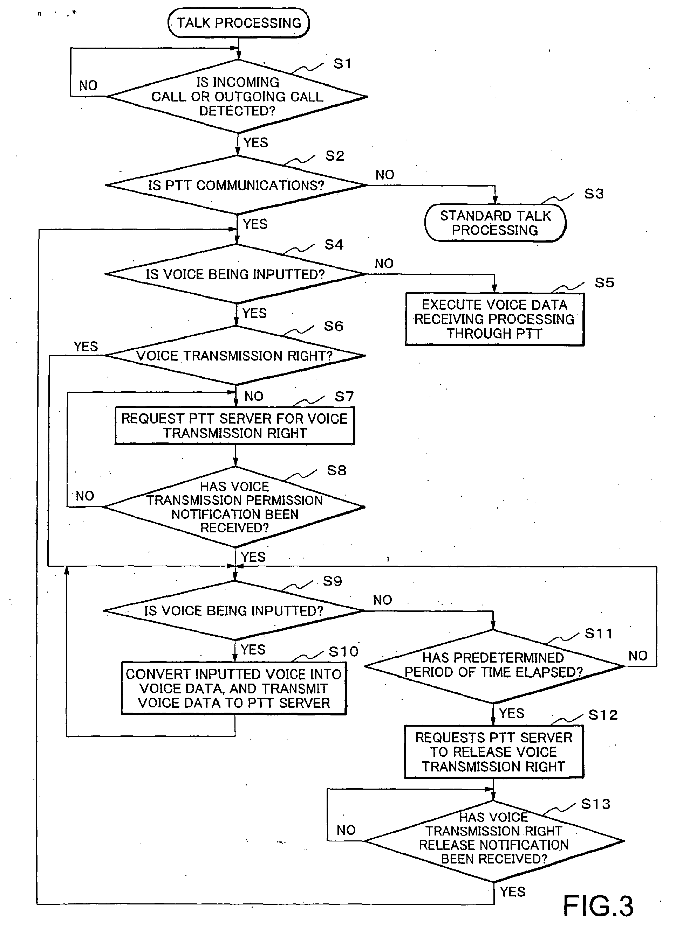

FIG. 3 is a flowchart showing an operational example of a terminal that transmits or receives a voice based on the PTT communications. First, description will be made on a case where the terminal receives a voice transmitted based on the PTT communications. The terminal detects an incoming call (YES in step S1) . If a voice in the incoming call is based on the PTT communications (YES in step S2) , and if the terminal has no voice input in its microphone (NO in step S4 ) , the terminal executes a processing of receiving the voice in the incoming call (S5) .

Next, description will be made on an example case where the terminal transmits a voice based on the PTT communications. The terminal detects that a user thereof has operated a key for initiating a call (YES in step S1). The user executes an operation for voice transmission based on the PTT communications (YES in step S2) . If a PTT function is not applied to an incoming call or an outgoing call, the terminal executes a standard talk processing (step S3). Then, the terminal detects whether or not an input of a voice is being made (step S4 ) . When the terminal detects the input of a voice (YES in step S4 ) , the terminal judges whether or not the terminal has obtained a voice transmission right (step S6). If the voice transmission right has been obtained (YES in step S6 ) , the terminal further detects whether or not there is another input of a voice being made (step S9) . Upon detection of the input of a voice (YES in step S9), the terminal converts the inputted voice into voice data, and transmits the voice data to a PTT server (step S10). If the terminal has not obtained a voice transmission right (NO in step S6 ) , the terminal requests the PTT server for a voice transmission right (step S7) . Upon reception of the permission for a voice transmission from the PTT server (YES in step S8), the terminal further detects whether or not there is another input of a voice being made (step S9). Upon detection of the input of a voice (YES in step S9 ) , the terminal converts the inputted voice into voice data, and transmits the voice data to a PTT server (step S10). If the terminal detects no input of a voice (NO in step S9 ) , the terminal judges whether or not any voice has been inputted for a predetermined period of time (step S11). If any voice has not been inputted for the predetermined period of time (YES in step S11), the terminal requests the PTT server to terminate the voice transmission right (step S12). Upon reception of a notification that the voice transmission right has been terminated (YES in step S13), the terminal returns to a state for detecting whether or not another input of a voice is being made (step S4). The above-mentioned various operations, which include the detection of an input of a voice, the judgment, the transmission of a request, and the conversion of voice data, are executed by the control circuit section 12 of the terminal according to a program stored in the storage section 16.

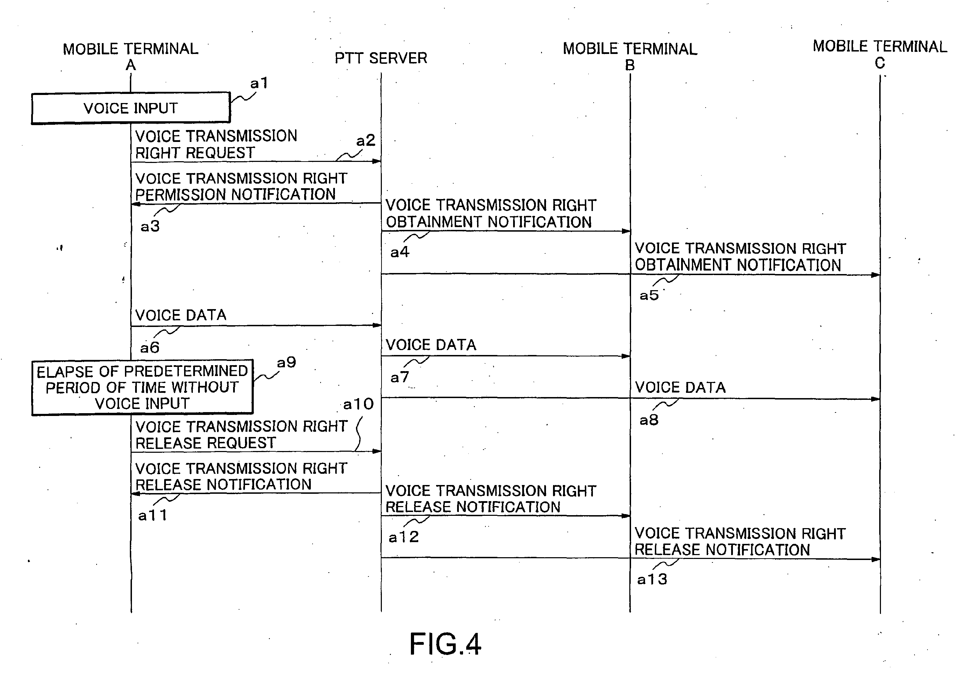

FIG. 4 is a sequence chart showing an operational example of the PTT communication system. In the example shown in FIG. 4, the user of the terminal A uses the PTT function to transmit a voice to the terminals B and C. The user of the terminal A makes a predetermined input to the terminal A, and then uses the microphone 13 to input a voice to be transmitted (a1) . The terminal A has not obtained a voice transmission right yet, the control circuit section 12 of the terminal A requests the PTT server 4 for a voice transmission right (a2) . After confirming that the terminals B and C have not obtained a voice transmission right, the PTT server 4 transmits a notification of the permission for the voice transmission right to the terminal A (a3) . The PTT server 4 notifies the terminals B and C that a certain terminal has obtained a voice transmission right (a4 and a5). The PTT server 4 can also notify the terminals B and C that the terminal A has obtained the voice transmission right. When the terminals A to C receive the notification described above, the control circuit section 12 of each terminal uses at least one of an alert sound and an indication display on a display section to inform the user that the notification has been received.

Upon reception of the voice transmission right permission notification from the PTT server 4, the terminal A uses a predetermined voice codec to convert the voice inputted into voice data through the microphone 13, and transmits the voice data to the PTT server 4 (a6) . The PTT server 4 transmits the voice data to the terminals B and C (a7 and a8) . Upon initial reception of a voice from the terminal A, the terminals B and C may emit an incoming call sound before outputting a voice. Voices, which are inputted to the terminal A between the time when the user of the terminal A starts inputting a voice and the time when the user receives the voice transmission right permission notification, may be stored temporarily and transmitted to the PTT server 4 prior to a voice to be sent after the reception of the voice transmission right permission notification. Alternatively, the voices inputted to the terminal A before the reception of the voice transmission right permission notification may be discarded. While the terminal A keeps transmitting voice data to the PTT server 4, the voice data are transmitted from the terminal A to the terminals B and C.

If the control circuit section 12 of the terminal A detects that any voice has not been inputted for a predetermined period of time (a9) the terminal A requests the PTT server 4 to terminate the voice transmission right (a10). Upon reception of the request, the PTT server 4 transmits a notification that the voice transmission right has been terminated or will be terminated to the terminals A to C. The predetermined period of time used above can be set by a user. Alternatively, the PTT server 4 may set the predetermined period of time, and the terminal A may obtain the predetermined period of time thus set. By setting the predetermined period of time, the PTT server 4 can detect whether or not any voice has been inputted for the predetermined period of time from the terminal A that has the voice transmission right. Upon detection that any voice has not been inputted for the predetermined period of time, the PTT server 4 can notify the terminals A to C that the voice transmission right has been terminated (not shown) . Upon reception of the notification that the voice transmission right has been terminated, the terminals A to C can use at least one of the alert sound and the indication display on the display section to inform the users that the notification has been received. Upon reception of the notification indicating the termination, any one of the terminals A to C is ready to input a voice through microphone 13 to request the PTT server 4 for a voice transmission right.

As described above, according to the present invention, a user can input a voice to obtain a voice transmission right, and does not need to press the PTT button 15 to start voice transmission through the PTT function. While maintaining voice transmission, the user does not need to hold the PTT button 15 down, either. In the case where the user (callee) of a terminal receives a voice based on the PTT communications but is unable to reach the PTT button 15, the callee only has to utter a voice to respond to the communication counterpart (caller). In addition, if any voice has not been inputted for a predetermined period of time, a voice transmission right is automatically terminated. Therefore, the user of each terminal can smoothly obtain a voice transmission right.

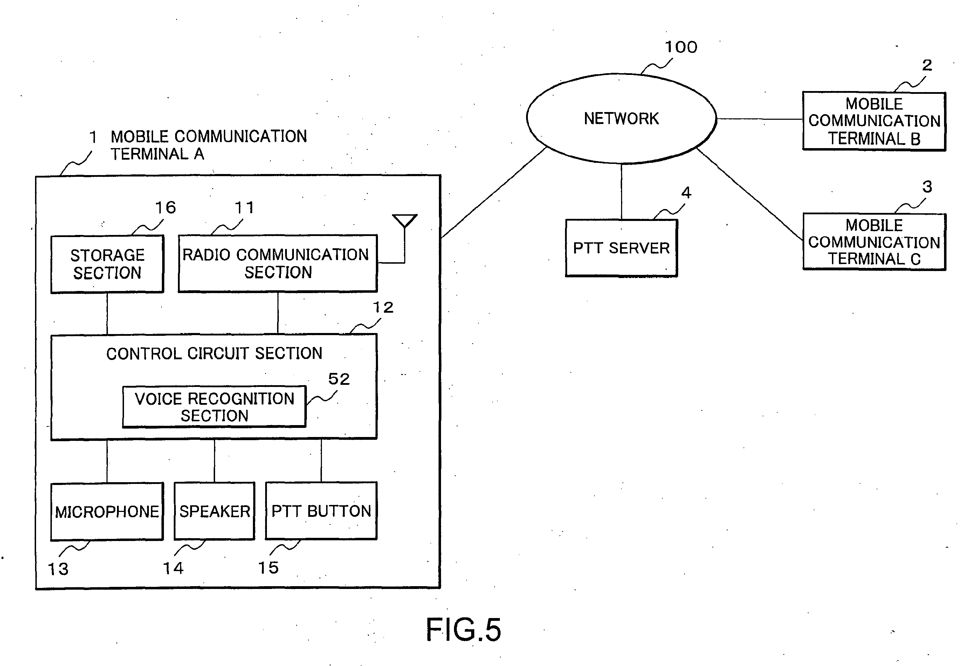

FIG. 5 is a block diagram of a PTT communication system according to another embodiment of the present invention. In the example shown in FIG. 5, a control circuit section 51 includes a voice recognition section 52. The other components of the PTT communication system, such as the network 100 and the PTT server 4 are the same as the components shown in FIG. 2. A mobile communication terminal having the voice recognition section 52 stores a given voice or voice message of one kind or two or more kinds, for example, "Hello, everyone". The voice recognition section 52 judges whether or not a voice inputted through the microphone 13 coincides with the stored voice. When the voice recognition section 52 determines the coincidence, the control circuit section 51 transmits a voice transmission right to the PTT server 4.

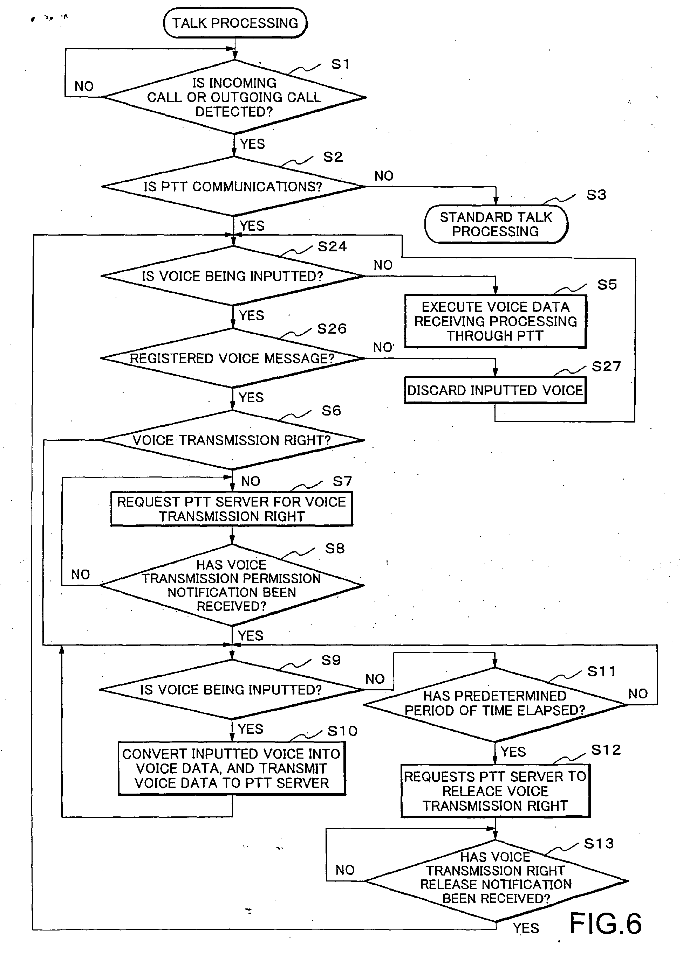

FIG. 6 is a flowchart of an operational example of the mobile communication terminal having the voice recognition section 52. The operational example is almost the same as the example shown in FIG. 3 except for an operation involved in voice recognition. Upon detection of a voice input (YES in step S24), the control circuit section 51 controls the voice recognition section 52 to judge whether or not the inputted voice coincides with the stored voice (step S26). If the inputted voice does not coincide with the stored voice (NO in step S26), the control circuit section 51 discards the inputted voice (S27), and returns to a state for detecting another inputted voice (step S24). When the inputted voice coincides with the stored voice (YES in step S26), the control circuit section 51 requests the PTT server 4 for a voice transmission right if not having one yet (S7). The other processings are the same as those in the example shown in FIG. 3. With a given voice thus stored, a voice transmission right can be prevented from being transmitted regardless of a user's intention.

In the present invention, applicable networks include a cellular phone network, a wireless LAN, and a wired network using cables, and applicable mobile communication terminals with the PTT function available include a personal digital assistant.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the spirit and scope of the following claims.

Further, it is the inventor's intent to retain all equivalents of the claimed invention even if the claims are amended during prosecution.

## Claims

1. A push-to-talk communication system, comprising:
a server for controlling push-to-talk communications; and
a mobile communication terminal for transmitting a voice to a predetermined communication counterpart based on the push-to-talk communications,
wherein the mobile communication terminal requests the server for a voice transmission right when detecting that a voice is being inputted thereto.

2. A push-to-talk communication system according to claim 1, wherein the mobile communication terminal requests the server to terminate the voice transmission right when judging that a voice has not been inputted for a predetermined period of time since reception of a voice transmission right permission notification from the server.

3. A push-to-talk communication system according to claim 2, wherein upon reception of a request for a termination of the voice transmission right from the mobile communication terminal, the server terminates the voice transmission right of the mobile communication terminal, and notifies a given plurality of mobile communication terminals of the termination of the voice transmission right.

4. A push-to-talk communication system according to claim 3, wherein upon reception of voice transmission right termination notification, the mobile communication terminal uses at least one of an alert sound and an indication display to inform a user thereof that the notification has been received.

5. A system according to any one of claims 1 to 4,
wherein when detecting that any voice has not been transmitted for a predetermined period of time since obtainment of the voice transmission right, the server terminates the voice transmission right of the mobile communication terminal, and notifies a given plurality of mobile communication terminals of the termination of the voice transmission right.

6. A push-to-talk communication system according to claim 5, wherein upon receiving a notification of the termination of the voice transmission right, the mobile communication terminal uses at least one of an alert sound and an indication display to inform a user thereof that the notification has been received.

7. A system according to any one of claims 1 to 6,
wherein upon reception of a request for the voice transmission right from the mobile communication terminal, the server notifies the mobile communication terminal of permission of voice transmission , and further notifies one or more given mobile communication terminals designated by the mobile communication terminal of the voice transmission permission.

8. A push-to-talk communication system according to claim 7, wherein upon reception of the voice transmission permission notification, the mobile communication terminal that has requested the voice transmission right uses at least one of an alert sound and an indication display to inform a user thereof that the notification has been received.

9. A push-to-talk communication system according to claim 7, wherein upon reception of the voice transmission permission notification, the one or more given mobile communication terminals use at least one of an alert sound and an indication display to inform users thereof that the notification has been received.

10. A system according to claim 7, 8 or 9,
wherein a voice inputted to the mobile communication terminal before reception of the voice transmission permission notification is discarded.

11. A system according to claim 7, 8 or 9,
wherein a voice inputted to the mobile communication terminal before reception of a voice transmission permission notification is transmitted to the server after the reception.

12. A system according to any one of claims 1 to 11,
wherein a mobile communication terminal outputs a ring tone when a voice is first received from the mobile communication terminal that starts to transmit voices based on the push-to-talk communications .

13. A system according to any one of claims 1 to 12,
wherein:
the mobile communication terminal includes:
a storage section for storing a given voice; and
a voice recognition section for recognizing an inputted voice; and
the mobile communication terminal requests the server for the voice transmission right when the inputted voice coincides with the stored voice.

14. A mobile communication terminal for transmitting a voice to a communication counterpart based on push-to-talk communications, comprising:
a voice input section; and
a control section for transmitting a request for a voice transmission right to a server for controlling the push-to-talk communications when detecting that a voice is being inputted to the mobile communication terminal.

15. A mobile communication terminal according to claim 14, wherein the control section requests the server to terminate the voice transmission right when detecting that any voice has not been inputted for a predetermined period of time since reception of a voice transmission permission notification from the server.

16. A terminal according to claim 14 or 15,
wherein upon reception of a voice transmission right termination notification from the server, the control section uses at least one of an alert sound and an indication display to inform a user of the mobile communication terminal that the notification has been received.

17. A terminal according to claim 14, 15 or 16,
wherein upon reception of a voice transmission permission notification from the server, the control section uses at least one of an alert sound and an indication display to inform a user of the mobile communication terminal that the notification has been received.

18. A terminal according to claim 14, 15, 16 or 17,
wherein when a notification that another mobile communication terminal has obtained a voice transmission right is received from the server, the control section uses at least one of an alert sound and an indication display to inform a user of the mobile communication terminal that the notification has been received.

19. A terminal according to any one of claims 14 to 18,
wherein the control section discards a voice inputted before reception of a voice transmission permission notification from the server.

20. A terminal according to any one of claims 14 to 19,
wherein the control section transmits a voice inputted before reception of a voice transmission permission notification from the server, to the server after the reception.

21. A terminal according to any one of claims 14 to 20,
wherein the control section outputs a ring.tone when voice is first received from a mobile communication terminal that starts to transmit voices based on the push-to-talk communications.

22. A terminal according to any one of claims 14 to 21,
further comprising:
a storage section for storing a given voice; and
a voice recognition section for recognizing an inputted voice; and
wherein the control section requests the server for the voice transmission right when the voice recognition section recognizes an input of the voice stored in the storage section.

23. A voice transmitting method for transmitting a voice from a communication terminal based on push-to-talk communications, comprising:
detecting whether or not a voice is being inputted; and
requesting a push-to-talk communication server for a voice transmission right when detecting that a voice is being inputted.

24. A voice transmitting method according to claim 23, further comprising:
detecting whether or not any voice has been transmitted for a predetermined period of time based on the push-to-talk communications; and
requesting a push-to-talk communication server for a termination of the voice transmission right when detecting that any voice has not been transmitted for the predetermined period of time.

25. A voice transmitting method according to claim 23 or 24,
wherein the voice inputted in the communication terminal is a voice preliminarily stored in the communication terminal.

26. A computer program product in a computer readable medium in a mobile communication terminal, the computer program product comprising the steps of:
detecting whether or not a voice is being inputted; and
requesting a push-to-talk communication server for a voice transmission right when detecting that a voice is being inputted.

27. A computer program product according to claim 26, further comprising the steps of:
detecting whether or not any voice has been transmitted for a predetermined period of time based on the push-to-talk communications; and
requesting a push-to-talk communication server for a termination of the voice transmission right when detecting that any voice has not been transmitted for the predetermined period of time.
